# EUROPEAN PATENT APPLICATION

(11) **EP 1 437 662 A1**
(43) Date of publication of application: **14.07.2004**
(21) Application number: 03000395.8
(22) Date of filing: 10.01.2003
(51) Int. Cl.: G06F 17/30

(54) **Method and device for accessing a database**

(71) Applicant: DEUTSCHE THOMSON-BRANDT GMBH, 78048 Villingen-Schwenningen (DE)
(72) Inventor: Li, Hui, Dr., 30419 Hannover (DE); Kochale, Axel, 31832 Springe (DE); Kubsch, Stefan, 31559 Hohnhorst (DE); Ostermann, Ralf, 30167 Hannover (DE); Peters, Hartmut, 30890 Barsinghausen (DE)
(74) Representative: Thies, Stephan

(57) **Abstract**

A comfortable method and device for searching databases are required. Thus, a database access concept including an interface descriptor (8) is proposed. The interface descriptor (8) may be a XML-file which describes interface categories and database access strategies. The database interface machine (2) may comprise a standard category display method (4) and a standard database access method (6). The database interface machine (2) can use the definitions contained in the interface descriptor (8) to set up a categorized interface to the database (1) and to perform complete database searches.

## Description

The present invention relates to a method for accessing a database including the steps of presenting at least one category item defining a search criterion for the database, selecting one or more of the at least one category item and searching in the database according to the selected one or more category items. Furthermore, the present invention relates to a corresponding device for accessing a database.

For searching desired data in a database, three methods are available: 1) It is possible to browse all data in the database and find out the wanted data; 2) It is possible to query the database by input keywords; and 3) It is possible to search in the database through some pre-defined categories.

The advantage of method 1 is that one can browse all data in the database. Its disadvantage is that it is an inefficient method in case of a large database. The advantage of method 2 is that one can query the database quickly by a keyword. Its disadvantage is that there is no guarantee to find the desired results, if the wrong keywords are used. The method 3 makes use of the advantages of method 1 and 2. It uses pre-defined categories (keywords) to sort and access all data in the database. By using method 3, the user may search for desired data efficiently among all database data. The disadvantage of method 3 is that the defined categories and associated database access implementation must be pre-built in the database-interface-machine. If users want to update categories and/or database access methods in their interface machine, they must update the related software or hardware.

In this connection document WO 02/15047 discloses an interface system for accessing data stored in a database. The interface comprises a data dictionary structurally defining the database and a dictionary of interface defining descriptors. The interface descriptors can be modified or new descriptors can be added. When performing searches, the interface descriptor has to be combined with the dictionary defined in the database. Generally, when the interface defining descriptors are modified or new descriptors are added, the database itself is also modified.

A further document US 6026333 discloses a data management system comprising a database and a category definition dictionary. The category definition dictionary defines categories for different time periods. These definitions are used when data has to be searched from the database. The category definitions are used for tracking re-classifications of products from a first category to a second category. An addition of categories is not disclosed.

In view of that it is the object of the present invention to provide more comfortable update possibilities for database accesses.

Therefore, according to the present invention there is provided a method for accessing a database including the steps of presenting at least one category item defining a search criterion for said database, selecting one or more of said at least one category item, and searching in said database according to said selected one or more category items, wherein said at least one category item is provided within interface descriptor means being commonly available for database accesses.

Furthermore, according to the present invention the above object is solved by a device for accessing a database including display means for presenting at least one category item defining a search criterion for said database, selecting means connected to said display means for selecting one or more of said at least one category item, and searching means connected to said selecting means for searching in said database according to said selected one or more category items, wherein said display means being connectable to external interface descriptor means providing said at least one category item.

In other words, a concept of interface descriptor for database accesses is proposed. The interface descriptor may be a XML file or a file in another standard programming language, which describes interface categories and database access strategies. A so formed database interface machine contains a standard category display method and a standard database access method, which, however, can use the definition of an interface descriptor to set up a categorized interface to the database and complete database search. The advantage of using such interface descriptor is, that, when users want to update the interface category and database access method, they do not need to change the software or hardware of the interface machine. They only have to update the interface descriptor, based on the XML schema. The interface descriptor can define complicated database access strategies by providing subcategory items and combined search criteria within a single category item. Thus, large databases, for example metadata databases, can be searched comfortably.

The present invention will now be described in more detail in connection with the attached figures showing in:
- Figure 1: a schematic diagram of a database access by pre-defined categories according to the prior art;
- Figure 2: a schematic diagram of a database access by pre-defined categories based on an interface descriptor according to the present invention;
- Figure 3: a scheme design view of an interface descriptor;
- Figure 4: pictures of a graphical user interface for presenting the interface descriptor;
- Figure 5: pictures of the graphical user interface for a search strategy and
- Figure 6: a picture of the graphical user interface for a combined search.

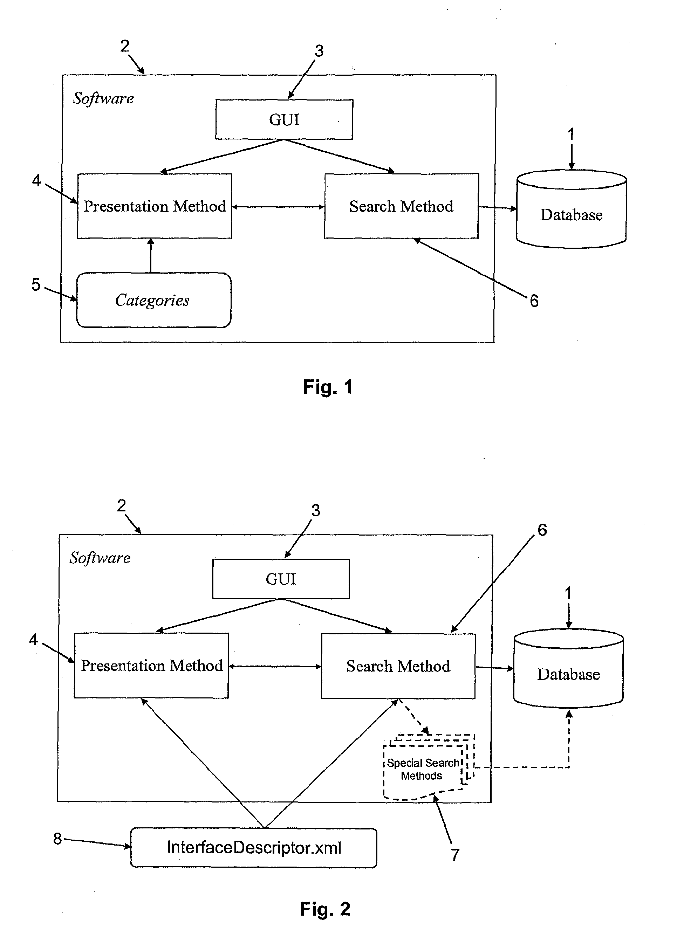

The following described examples are preferred embodiments of the present invention. However, for better understanding of the present invention a traditional database categorized access application is explained first in connection with Fig. 1.

Traditionally, a database 1 can be accessed by an interface machine 2. Pre-defined category items 5 are shown by an associated presentation method 4 via a graphic user interface (GUI) 3. These category items 5 are defined in category classes in the interface machine 2. The category items are a fixed part of the interface machine 2. Under each category item, an associated individual database access method 6 is defined, or all category items can share a general database access method 6.

The access method according to the prior art thus includes the following steps. The user may browse a category of database 1, choose a category item and search the database 1 through an access method 6 defined under the current category item.

As mentioned above, the disadvantage of this traditional database categorized access application (Fig.1) is that the defined categories and the associated database access implementation must be pre-built in the database-interface-machine 2. If users want to update the categories and the database access method in their interface machine 2, they must update the related software or hardware.

To solve this disadvantage, a database categorized access method based on an interface descriptor is proposed according to the present invention.

As shown in Fig.2, the database 1 can be accessed by the interface machine 2. The interface machine 2 consists of GUI (graphic user interface) 3, a standard category presentation method 4, a standard general database access method 6 and some special database access methods 7, if any. However, the interface machine 2 does not contain any category definition means. The interface machine 2 imports category definitions from an interface descriptor 8, which locates outside the interface machine 2. GUI 3 utilizes a standard category presentation method 4 to import a category message from the interface descriptor 8. When the user searches the database 1 under a selected category, the interface machine 2 must import associated access strategy messages from the interface descriptor 8. Under instruction of the interface descriptor access strategy message, the interface machine 2 uses a standard database access method 6 or any special access method 7 to search the database 1.

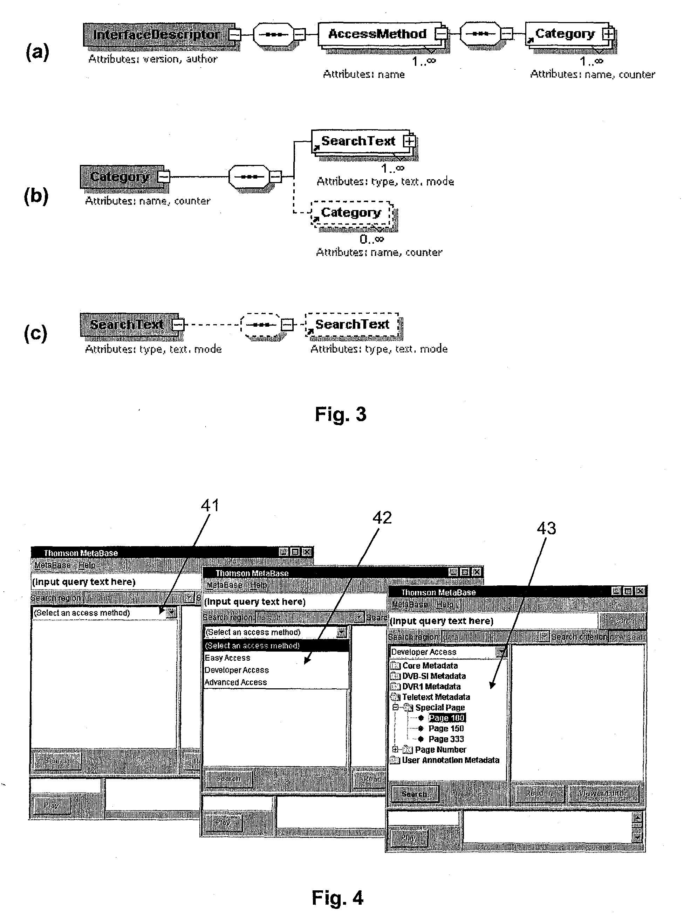

Preferably, the interface descriptor is a XML file, which is defined by its XML schema. Fig.3 is a schema design view of the current interface descriptor.

As shown in Fig.3(a), the root element is "InterfaceDescriptor". It has two attributes: "version" (required) and "author" (optional). Attribute "version" includes the version message of the current interface descriptor. The version message directs the GUI to use its associated application to show category and search database. Attribute "author" shows the developer of the current interface descriptor.

The root element "InterfaceDescriptor" contains one or more sub-elements "AccessMethod" (min. 1 ~ max. unbounded). This is indicated by the symbol between "InterfaceDescriptor" and "AccessMethod". Each "AccessMethod" includes an attribute "name"(required), which gives the name of a database access method. See Fig.3(a).

Each "AccessMethod" has one or more sub-elements "Category" (min. 1 ~ max. unbounded). Each "Category" contains the attributes "name" (required) and "counter" (optional). Attribute "name" contains the shown name of category. Attribute "counter" contains the number of the last search result. See Fig.3(a).

As shown in Fig.3(b), element "Category" is a global element, which contains one or more sub-elements "SearchText" (min. 1 ~ max. unbounded) and optionally one or more sub-elements "Category" (min. 0 ~ max. unbounded). Element "SearchText" has the attributes "type" (required), "text" (required) and "mode" (optional). Attribute "type" defines the type of search text, for example a page of a teletext. Currently, its value can be chosen from "element", "attribute", "value" or "no". Attribute "text" includes the keyword for search, for example a specific number of a page of the teletext. Each "Category" can have unbounded "SearchText", which means each "Category" can have more than one keyword for search. Attribute "mode" represents the name of a specific database access method 7. When it is default, a standard general access method is used. Otherwise, the specific access method 7 will be used. Each "Category" can have own sub-elements "Category".

As shown in Fig.3(c), element "SearchText" is a global element, which may contain zero, one or more sub-elements "SearchText" (min. 0 ~ max. unbounded). Sub-element "SearchText" has the same schema as its parent element "SearchText". This structure makes it possible to refine search results.

### Example of application

The database categorized accessing based on the interface descriptor may be applied to a metadata database interface machine.

As shown in Fig.4, the user may import InterfaceDescriptor.xml by clicking the ComboBox 41. All current category access methods included in the InterfaceDescriptor.xml are shown in 42. When opening the "Developer Access" method, all its categories are presented in a tree view pane as shown in 43. Here, a standard category input method in the interface machine is utilized for the category presentation. Each category may contain sub category items, as further shown in 43. All these category messages are defined in InterfaceDescriptor.xml. The user may browse all pre-defined categories in the tree view pane.

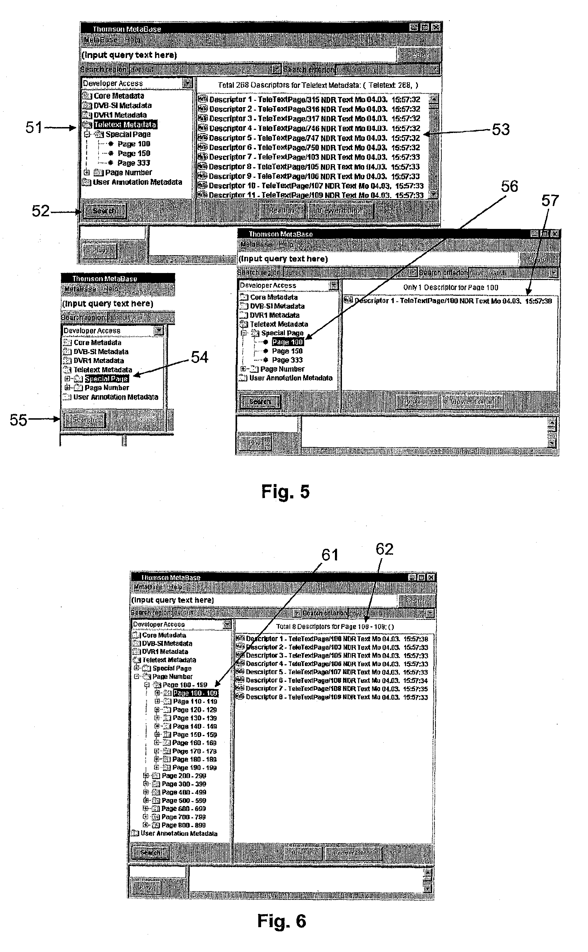

In Fig.5, the user may select category "Teletext Metadata" 51 and press "Search" button 52. All found results are shown in a view pane 53. In this case, a standard database access method imports the "SearchText" message from the InterfaceDescriptor.xml and searches the text keyword "TeleTextPage" as type "Element". The respective XML command is:

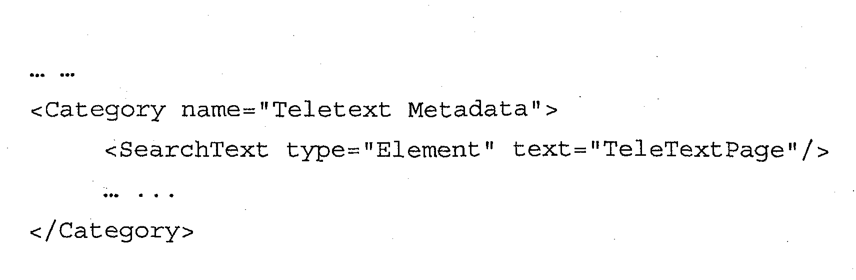

In Fig.5, when category "Special Page" 54 is selected, "search" button 55 is inactive. This means that the category "Special Page" 54 is defined as not-searchable in InterfaceDescriptor.xml. The respective XML command is:

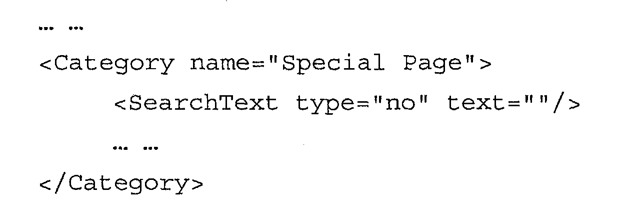

Furthermore, the user may search under category "Page 100" 56. In this case, as defined in InterfaceDescriptor.xml, the search machine will search for keyword "100" as type "value" under attribute "PageNo" among all teletext metadata. A found result is shown in a view pane 57. The respective XML command is:

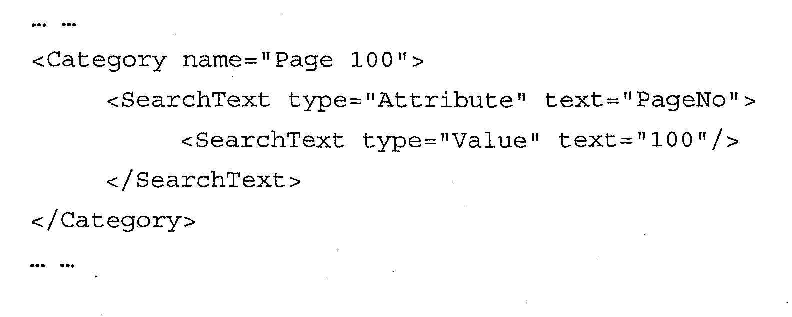

As shown in Fig.6, the user may search under category "Page 100-109" 61. In this case, as defined in InterfaceDescriptor.xml, a group of "SearchText" is defined so that a combined search corresponding to ten single searches will be started. The search machine will search for teletext pages from number 100 to 109. All found results are shown in a view pane 62. The respective XML command is:

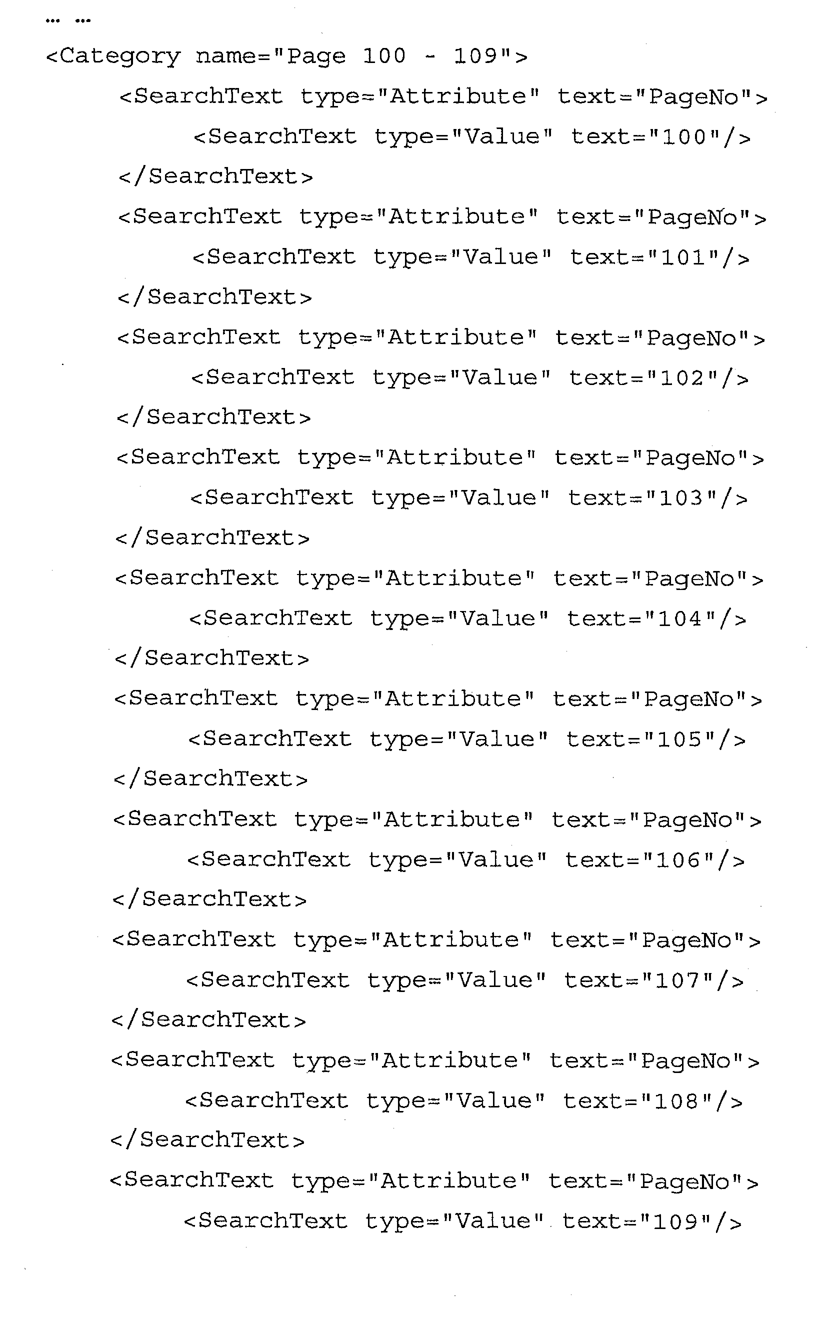

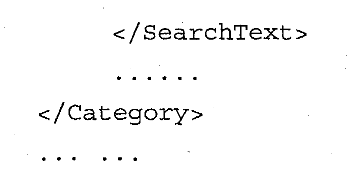

Thus, the interface descriptor for database categorized accessing allows to develop more complicated data access strategies.

The interface descriptor according to the present invention can work independently, since all relevant dictionary elements such as search key words are included in the interface descriptor. Furthermore, the interface descriptor can access the database directly and does not need any additional category definition dictionary.

## Claims

1. Method for accessing a database (1) including the steps of
presenting (4) at least one category item defining a search criterion for said database (1),
selecting one or more of said at least one category item, and
searching (6) in said database (1) according to said selected one or more category items,
**characterized by**
providing said at least one category item within interface descriptor means being commonly available for database accesses.

2. Method according to claim 1, wherein said interface descriptor means (8) is a software unit written in a standard programming language.

3. Method according to claim 2, wherein said standard programming language is XML.

4. Method according to one of the claims 1 to 3, wherein a plurality of category items is provided and at least one category item of said plurality of category items includes one or more sub-category items.

5. Method according to one of the claims 1 to 4, wherein said at least one category item includes combined search criteria.

6. Method according to one of the claims 1 to 5, wherein the database is a metadata database.

7. Device for accessing a database (1) including
display means for presenting (4) at least one category item defining a search criterion for said database (1),
selecting means connected to said display means for selecting one or more of said at least one category item, and
searching means connected to said selecting means for searching (6) in said database (1) according to said selected one or more category items,
**characterized in that**
said display means being connectable to external interface descriptor means (8) providing said at least one category item.

8. Device according to claim 7, wherein said interface descriptor means is a software unit written in a standard programming language.

9. Device according to claim 8, wherein said standard programming language is XML.

10. Device according to one of the claims 7 to 9, wherein said external interface descriptor means (8) includes a plurality of category items as search criteria and at least one category item of said plurality of category items includes one or more sub-category items.

11. Device according to one of the claims 7 to 10, wherein said at least one category item includes combined search criteria.

12. Device according to one of the claims 7 to 11, wherein said database is a metadata database.
